# DEMANDE DE BREVET EUROPEEN

(11) **EP 0 845 434 A1**
(43) Date de publication de la demande: **03.06.1998**
(21) Numéro de dépôt: 97402873.0
(22) Date de dépôt: 28.11.1997
(51) Int. Cl.: B66C 1/02

(54) **Ventouse opblongue à soufflet**

(30) Priorité: 28.11.1996 FR 9614594
(71) Demandeur: Société d'Application De Procédés Electroniques et Mécaniques SAPELEM, 49070 Beaucouzé (FR)
(72) Inventeur: Denoel, Pascal, 49070 Beaucouze (FR); Lopion, Jean-Emile, 49070 Beaucouze (FR); Guichard, Patrick, 49000 Angers (FR)
(74) Mandataire: Dawidowicz, Armand

(57) **Abrégé**

L'invention concerne une ventouse oblongue en matière souple du type comprenant une chambre reliée à une source de vide, cette chambre présentant une cavité (1A) ouverte en direction de l'objet à saisir, cette cavité (lA) étant délimitée par une face formant fond et une paroi périphérique à soufflet se terminant par une lèvre (2) périphérique externe destinée à venir s'appliquer sur la surface de l'objet à soulever et à déplacer, cette lèvre (2) délimitant la surface (5) dite active de préhension de la ventouse.

Cette ventouse se caractérise par au moins une butée (6) qui limite ou empêche la déformation de la lèvre (2) périphérique externe lorsque la ventouse, activée par une action de vide, est soumise à un effort de traction.

Application : préhension d'objets par dépression.

## Description

La présente invention concerne une ventouse en matière souple pour appareil de préhension d'objets par dépression.

Un appareil de préhension à ventouses a par exemple été décrit dans le brevet européen EP-A-0.336.799 de la demanderesse.

Les ventouses pour appareil de préhension d'objets par dépression sont bien connues par ceux versés dans cet art. Ces ventouses comprennent une chambre reliée à une source de vide quelconque, telle qu'un bloc dépresseur, un dispositif d'aspiration ou similaire. Cette chambre présente une cavité ouverte s'évasant en direction de l'objet à saisir, cette cavité étant délimitée par une face formant fond et une paroi périphérique souple à soufflet se terminant par une lèvre périphérique externe destinée à venir s'appliquer sur la surface de l'objet à saisir et à déplacer.

Les ventouses à soufflet présentent l'intérêt de se déformer aisément et en particulier de "rotuler", c'est-à-dire de fermer un soufflet en un emplacement de la paroi périphérique de la ventouse et ouvrir ledit soufflet en un emplacement opposé de ladite paroi. Elles sont donc particulièrement adaptées pour des appareils de préhension intégrant plusieurs ventouses. En effet, il arrive fréquemment que la surface de l'objet à choisir ne soit pas parfaitement plane. Il est donc nécessaire que certaines ventouses puissent se déformer et occuper une position autre qu'une position dans laquelle leur surface active est strictement parallèle à la surface de l'objet à saisir pour permettre la préhension dudit objet. Ces ventouses sont par ailleurs bien adaptées à la préhension d'objets galbés.

Il arrive également que les objets à saisir présentent une forme allongée. Dans ce cas, les ventouses circulaires sont mal adaptées à la préhension de ce type d'objets. On préférera utiliser des ventouses oblongues.

Toutefois, jusqu'à présent, les ventouses oblongues à soufflet sont rarement utilisées pour la préhension d'objets du fait de leur faible résistance à l'arrachement. En effet, on constate, lors de la mise en dépression de telles ventouses, que les ventouses ont tendance à se mettre "en huit" quand on tire dessus pour assurer le levage de l'objet saisi. Cette déformation de la ventouse peut avoir pour conséquence le décrochage anormal de l'objet à saisir. Il en résulte des risques de blessures importants pour l'opérateur placé à proximité de l'appareil de préhension. Pour pallier cet inconvénient, des industriels ont rigidifié le corps, en particulier les parois de la ventouse. Dans ce cas, toutefois, le ou les soufflets ne remplissent plus leur rôle et la ventouse perd de son intérêt car elle ne peut plus s'adapter à la préhension d'objets de forme quelconque.

Le but de la présente invention est donc de proposer une ventouse oblongue à soufflet qui présente, pour une surface utile active de préhension identique à celle d'une ventouse circulaire, une capacité de préhension identique à celle d'une ventouse circulaire.

Un autre but de la présente invention est de proposer une ventouse à soufflet oblongue dont la résistance à l'arrachement est augmentée de manière à empêcher tout risque de décrochement de la ventouse de la surface de l'objet à saisir.

A cet effet, l'invention a pour objet une ventouse oblongue en matière souple, pour appareil de préhension d'objets par dépression, du type comprenant une chambre reliée à une source de vide, cette chambre présentant une cavité ouverte en direction de l'objet à saisir, cette cavité étant délimitée par une face formant fond et une paroi périphérique, à soufflet, se terminant par une lèvre périphérique externe destinée à venir s'appliquer sur la surface de l'objet à saisir et à déplacer, cette lèvre délimitant la surface dite active de préhension de la ventouse, caractérisée en ce que la ventouse comporte au moins une butée qui limite ou empêche le rapprochement d'au moins certaines portions du bord périphérique interne de ladite lèvre au delà d'une position de rapprochement prédéterminée tout en autorisant une déformation au moins partielle du soufflet de la ventouse lorsque la ventouse, activée par une action de vide, est soumise à un effort de traction.

Grâce à cette ou ces butée(s) de limitation ou d'empêchement de la déformation de la lèvre périphérique externe, tout risque de décrochement de la ventouse à soufflet de l'objet à saisir est évité dans le cas d'une utilisation normale. Toutefois une ou de telle(s) butée(s) n'empêche(nt) pas du fait de sa (ou de leur) conception(s) la paroi à soufflet de la ventouse de se déformer car cette ou ces butée(s) n'engendre(nt) pas une rigidification suffisante de la paroi. En conséquence, cette ou ces butée(s) permet(tent) une déformation parfaitement contrôlée de la ventouse.

De préférence, au moins une desdites butées est logée à l'intérieur de la ventouse.

Selon une forme de réalisation préférée de l'invention, au moins l'une des butées est élastiquement déformable. En outre, avantageusement, la lèvre périphérique externe de la ventouse comporte sur sa face d'appui sur la surface de l'objet à saisir et à déplacer au moins un crampon.

On constate alors, dans cette conception, que butée et crampon coopèrent entre eux pour empêcher ou réduire au maximum la déformation de ladite ventouse de manière à obtenir une capacité de préhension la plus élevée possible. Toutefois, la seule présence des crampons n'aurait pas permis l'obtention de ce résultat.

Avantageusement, au moins l'une des butées peut être réalisée d'une seule pièce avec le reste de la ventouse, elle peut être réalisée par moulage dans une matière souple telle que du caoutchouc.

L'invention sera bien comprise à la lecture de la description suivante d'exemples de réalisation, en référence aux dessins annexés dans lesquels :
la figure 1 représente une vue d'ensemble d'une ventouse conforme à l'invention ;
la figure 2 représente une vue de dessous de la ventouse de la figure 1 ;
la figure 3 représente une vue en coupe selon B-B de la figure 1 ;
la figure 4 représente une vue de dessous d'un autre mode de réalisation d'une ventouse conforme à l'invention ;
la figure 5 représente une vue en coupe transversale d'une ventouse conforme à celle représentée à la figure 4, celle-ci occupant une position de repos ;
la figure 6 représente une vue identique à celle de la figure 5, la ventouse étant en position active et
la figure 7 représente une vue de côté d'un autre mode de réalisation d'une ventouse conforme à l'invention.

La ventouse, désignée par la référence générale 1, objet de l'invention est une ventouse réalisée en une matière souple. Cette ventouse comprend une chambre délimitant une cavité lA et, disposé généralement à l'opposé de cette cavité 1A, un embout 3, de préférence axial, tubulaire moulé d'une seule pièce avec le reste de la ventouse 1 et destiné à être raccordé à un dispositif d'aspiration et de levage de l'appareil. Ce dispositif peut être par exemple du type décrit dans le brevet européen EP-A-0.336.799. Cet embout 3 de la ventouse 1 peut être engagé sur un tube relié à la source de dépression, la liaison avec ce tube étant généralement réalisée par engagement à force ou par un collier qui comprime radialement l'embout sur le tube. Tout autre mode de réalisation de l'embout 3 peut également être envisagé.

La cavité 1A, ouverte en direction de l'objet (non représenté) à saisir, est quant à elle délimitée par une face 9 formant fond, à travers laquelle l'embout 3 axial tubulaire débouche généralement dans ladite chambre et par une paroi périphérique à soufflet. La paroi à soufflet peut présenter des dimensions variables d'une ventouse à une autre. Dans les exemples représentés, la ventouse est dite ventouse à un soufflet et demi. En effet, le soufflet est généralement constitué de deux portions triangulaires en section transversale, la dernière portion se terminant par une lèvre 2 périphérique externe destinée à venir s'appliquer sur la surface de l'objet à soulever et à déplacer, cette lèvre constituant un demi soufflet. Cette lèvre 2 délimite donc la surface 5 dite active de préhension de la ventouse 1. Tout ce qui sera dit par la suite sur cette ventouse est donc applicable à des ventouses à deux soufflets et demi, trois soufflets et demi, etc.

Cette ventouse délimite une surface 5 active de préhension oblongue et non circulaire, contrairement à la plupart des ventouses utilisées à ce jour. Cette ventouse comporte donc au moins une butée 6 qui limite ou empêche la déformation de la lèvre 2 périphérique externe, par déplacement dans le sens d'un rapprochement de portions 4A du bord périphérique interne 4 de ladite lèvre 2 lorsque la ventouse 1, activée par une action de dépression, est soumise à un effort de traction, en particulier pour le levage de l'objet. En effet, lorsque cette ventouse 1 est mise sous dépression, on constate, en l'absence d'au moins une telle butée 6 de limitation de la déformation, le rapprochement des portions 4A rectilignes du bord périphérique interne 4 de la lèvre 2 de la ventouse 1 et la déformation sensiblement en forme de huit de ladite ventouse 1 dans sa surface 5 de travail. En effet, dans ce cas, les portions 4A rectilignes se bombent pour quasiment se toucher dans la portion centrale de la cavité lA tandis que les portions 4B courbes du bord périphérique interne 4 de la lèvre 2 demeurent inchangées. Ce rapprochement des portions 4A rectilignes du bord périphérique interne 4 de ladite lèvre 2 est susceptible de générer des fuites dans la surface 5 active de préhension de la ventouse 1, provoquant alors une diminution de la surface utile et par suite un éventuel détachement de la ventouse 1 dudit objet à saisir.

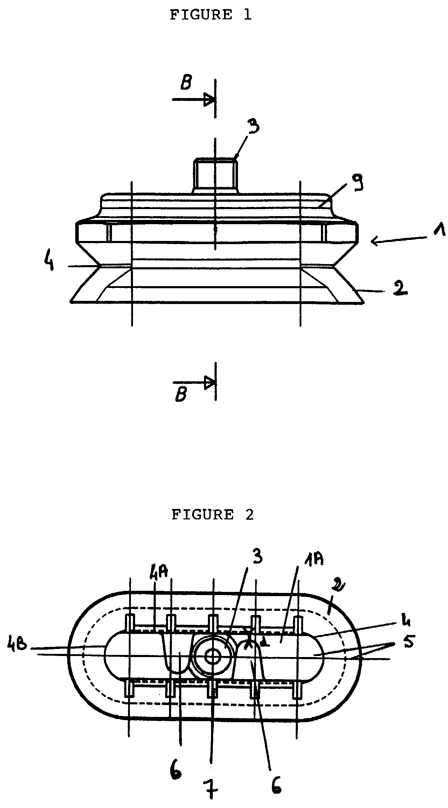

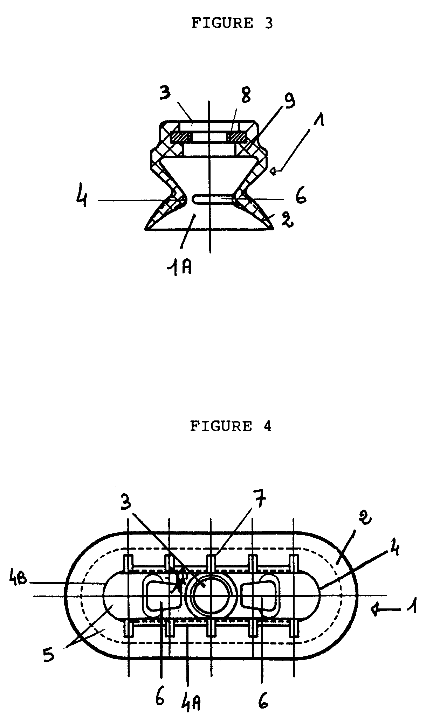

Pour empêcher un tel accident, il est prévu au moins une butée, de préférence élastiquement déformable, qui autorise un rapprochement des portions 4A rectilignes du bord périphérique interne 4 de la lèvre 2 jusqu'à une position de rapprochement prédéterminée, ou empêche un rapprochement des portions 4A rectilignes du bord périphérique interne 4 de la lèvre 2 au delà d'une position de rapprochement prédéterminée. Dans le cas où cette ou ces butées empêchent un rapprochement des portions 4 au delà d'une position de rapprochement prédéterminée, ladite position de rapprochement prédéterminée peut correspondre à la position initiale de repos de ladite ventouse. Cette ou ces butées peuvent affecter un grand nombre de formes, comme le montrent les figures 3, 4 et 7. Dans tous les cas, cette ou ces butées ne nuisent pas à la déformation de ladite ventouse mais simplement la limite. En effet, une butée 6 de limitation de la déformation de la lèvre 2 périphérique externe ne doit nuire ni à la capacité de rotuler de la ventouse, ni à la course de ladite ventouse 1. Il est donc important que, à la fois, les soufflets remplissent leur rôle pour permettre la déformation de la ventouse et, par suite, la préhension d'objets de forme quelconque tout en éliminant tout risque de décrochement de ladite ventouse de la surface de l'objet à saisir. On constate ainsi, comme le montrent respectivement les figures 2 et 4, qu'une déformation des portions 4A rectilignes du bord 4 périphérique interne de la lèvre 2 périphérique externe de la ventouse 1 est autorisée sur une distance d ou 2 x d' dans le sens d'un rapprochement desdits bords 4A. Par ailleurs, le soufflet peut se déformer normalement ou de manière quasi-normale.

Cette ou ces butées peuvent être réalisées d'une seule pièce avec le reste de ladite ventouse et par moulage dans une matière souple telle que du caoutchouc. Un tel mode de réalisation est représenté aux figures 2 et 4. Dans les deux cas représentés, les butées sont au nombre de deux.

Dans l'exemple représenté à la figure 2, au moins l'une des butées affecte la forme d'une languette prenant naissance sur une portion 4A du bord 4 périphérique interne de ladite lèvre 2 et s'étendant parallèlement à la surface 5 active de préhension de la ventouse. L'axe longitudinal de cette ou ces languettes est orthogonal à l'axe longitudinal de la ventouse. Cette ou ces butées empêchent ainsi le rapprochement des portions 4A rectilignes du bord 4 périphérique interne de la lèvre 2 périphérique externe au-delà d'une position de rapprochement prédéterminée, c'est-à-dire au-delà d'une distance d dans la figure 2. En outre, ces butées sont de préférence élastiquement déformables pour permettre la saisie d'objets galbés.

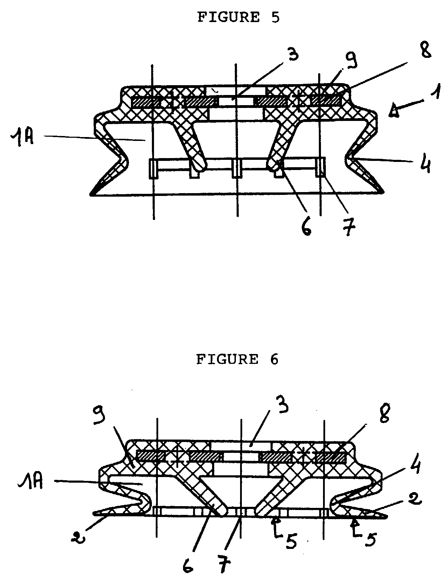

Dans les exemples représentés aux figures 4 à 6, au contraire, au moins l'une des butées, toujours réalisée par moulage dans une matière souple telle que du caoutchouc, affecte la forme d'une languette prenant naissance en un emplacement de la face 9 formant fond de la ventouse 1 et s'étendant de préférence de manière inclinée en direction de la surface 5 active de préhension de la ventouse 1. Là encore, les languettes sont au nombre de deux et sont inclinées à allure convergente en direction de la surface 5 active de préhension de la ventouse, leur axe longitudinal étant contenu dans un plan parallèle au plan longitudinal médian de la ventouse. De préférence, l'extrémité libre de ces languettes est disposée dans le plan de la surface 5 active de préhension de la ventouse. Du fait que ces languettes sont élastiquement déformables, elles ne gênent en rien la préhension d'objets dont la surface à saisir serait par exemple galbée. En effet, ces butées, au cours de la saisie de l'objet, se déforment pour se rabattre sensiblement en direction de la face 9 formant fond de la ventouse lorsque la ventouse 1 passe d'une position de repos correspondant à la figure 5 à une position active correspondant à la figure 6. L'exercice d'une poussée supplémentaire sur la face 9 formant fond de la ventouse générerait un rapprochement encore plus important de la butée en direction de la face 9 formant fond de ladite ventouse. Cette saisie d'objets de forme quelconque n'est donc possible que parce que la butée est élastiquement déformable et peut donc suivre la déformation de la paroi périphérique externe de la ventouse.

Pour pallier le jeu de déformation de la ventouse 1 obtenu par le fait que la butée n'est pas d'une dimension sensiblement identique à la distance entre deux portions 4A opposées du bord 4 périphérique interne de la lèvre 2 de la ventouse 1, la lèvre 2 périphérique externe de la ventouse 1 comporte sur sa face 5 d'appui sur la surface de l'objet à soulever et à déplacer au moins un crampon 7. Ces crampons 7 sont disposés de manière régulière ou irrégulière à la périphérie de la cavité 1A. Ces crampons 7 sont réalisés d'une seule pièce, de préférence par moulage, avec le reste de ladite ventouse 1. Ces crampons 7 peuvent affecter un grand nombre de formes. Ces crampons 7 empêchent ou limitent la déformation de la lèvre 2 périphérique externe au moment où la ventouse 1 est mise sous dépression et vient en contact avec la surface de l'objet à saisir. Le fait d'éviter ainsi un glissement de la face d'appui de la lèvre 2 lors de la mise en contact de la ventouse 1 avec l'objet à saisir permet également de réduire par la suite la déformation de la ventouse. Ces crampons 7 coopèrent donc avec les butées 6 élastiquement déformables.

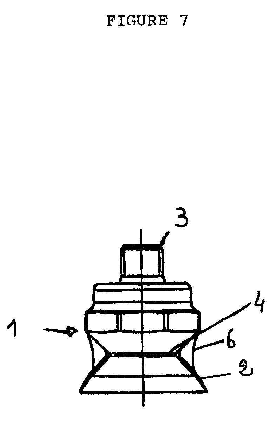

La figure 7 représente un autre mode de réalisation des butées. Ces butées 6 sont alors disposées à l'extérieur de ladite ventouse et relient une portion de la paroi périphérique de ladite ventouse 1 à la lèvre 2 périphérique externe de ladite ventouse. Toutefois, cette solution est moins performante que les solutions décrites précédemment.

De même, il peut être prévu que au moins l'une des butées 6 soit constituée par une pièce rapportée, emboîtée de façon amovible sur le bord périphérique interne 4 de ladite lèvre 2. La butée 6 constituée par cette pièce rapportée affecterait par exemple dans ce cas sensiblement la forme d'un diabolo, la gorge ainsi ménagée permettant l'emboîtement par un montage amovible de ladite pièce sur le bord 4 périphérique interne de la lèvre 2. Cette pièce rapportée serait en outre de préférence élastiquement déformable pour pouvoir épouser le profil des objets à saisir.

On constate, dans l'ensemble des figures représentant la ventouse 1, que la face 9 formant fond de la ventouse 1 est renforcée au moyen d'une plaque 8 métallique insérée à l'intérieur de ladite face 9 formant fond lors du moulage de ladite ventouse. Cette plaque métallique 8, non obligatoire, a pour objet de rigidifier le fond de la ventouse.

Il est bien évident que la présente invention n'a d'intérêt que pour les ventouses de forme non circulaire. En effet, dans le cas d'une ventouse dont la surface active est délimitée par un cercle, les bords de cette surface se déforment tous de manière identique en direction du centre de ladite cavité. En conséquence, les problèmes survenant lors de la mise en dépression d'une ventouse par exemple oblongue ne se reproduisent absolument pas dans le cas d'une ventouse circulaire.

## Revendications

1. Ventouse (1) oblongue en matière souple, pour appareil de préhension d'objets par dépression, du type comprenant une chambre reliée à une source de vide, cette chambre présentant une cavité (lA) ouverte en direction de l'objet à saisir, cette cavité (lA) étant délimitée par une face (9) formant fond et une paroi périphérique à soufflet se terminant par une lèvre (2) périphérique externe destinée à venir s'appliquer sur la surface de l'objet à soulever et à déplacer, cette lèvre (2) délimitant la surface (5) dite active de préhension de la ventouse (1),
caractérisée en ce que la ventouse (1) comporte au moins une butée (6) qui limite ou empêche le rapprochement d'au moins certaines portions (4A) du bord périphérique interne (4) de ladite lèvre (2) au delà d'une position de rapprochement prédéterminée tout en autorisant une déformation au moins partielle du soufflet de la ventouse (1) lorsque la ventouse (1), activée par une action de vide, est soumise à un effort de traction.

2. Ventouse selon la revendication 1,
caractérisée en ce qu'au moins une desdites butées (6) est logée à l'intérieur de la ventouse (1).

3. Ventouse selon l'une des revendications 1 et 2,
caractérisée en ce qu'au moins l'une des butées (6) est élastiquement déformable.

4. Ventouse selon l'une des revendications 1, 2 ou 3,
caractérisée en ce qu'au moins l'une des butées (6) est réalisée d'une seule pièce avec le reste de ladite ventouse (1).

5. Ventouse selon la revendication 4,
caractérisée en ce qu'au moins l'une des butées (6) est réalisée par moulage dans une matière souple telle que du caoutchouc.

6. Ventouse selon l'une des revendications 1 à 5,
caractérisée en ce qu'au moins l'une des butées affecte la forme d'une languette.

7. Ventouse selon l'une des revendications 1 à 6,
caractérisée en ce qu'au moins l'une des butées affecte la forme d'une languette prenant naissance sur une portion (4A) de bord (4) périphérique interne de ladite lèvre (2) et s'étendant parallèlement à la surface (5) active de préhension de la ventouse (1).

8. Ventouse selon l'une des revendications 1 à 6,
caractérisée en ce qu'au moins l'une des butées affecte la forme d'une languette prenant naissance en un emplacement de la face (9) formant fond de la ventouse (1) et s'étendant de préférence de manière inclinée en direction de la surface (5) active de préhension de la ventouse (1).

9. Ventouse selon l'une des revendications 1 à 3,
caractérisée en ce qu'au moins l'une des butées est une pièce rapportée emboîtée de façon amovible sur le bord périphérique interne (4) de ladite lèvre (2).

10. Ventouse selon l'une des revendications 1 à 9,
caractérisée en ce que la lèvre (2) périphérique externe de la ventouse (1) comporte, sur sa face (5) d'appui sur la surface de l'objet à saisir et à déplacer, au moins un crampon (7).

11. Ventouse selon la revendication 10,
caractérisée en ce que le ou les crampons (7) sont réalisés d'une seule pièce, de préférence par moulage, avec le reste de ladite ventouse (1).
